# EUROPEAN PATENT APPLICATION

(11) **EP 3 100 785 A1**
(43) Date of publication of application: **07.12.2016**
(21) Application number: 16172193.1
(22) Date of filing: 31.05.2016
(51) Int. Cl.: B01J 37/02, B01J 23/00, B01J 23/34, B01J 23/656, B01D 53/94, B01J 37/08, B01J 37/00

(54) **MULTILAYERED CATALYST FOR DIESEL OXIDATION APPLICATIONS COMBINING A PSEUDOBROOKITE OXIDE PHASE AB2O5 WITH LOW LOADINGS OF PLATINUM GROUP METALS (PGM) FOR HIGH SULFUR POISONING RESISTANCE**

(30) Priority: 01.06.2015 US 201514726807
(71) Applicant: Clean Diesel Technologies, Inc., Oxnard, CA 93033 (US)
(72) Inventor: NAZARPOOR, Zahra, Camarillo, CA 93012 (US); GOLDEN, Stephen J., Santa Barbara, CA 93111 (US)
(74) Representative: Gevers & Orès

(57) **Abstract**

Sulfur-resistant synergized platinum group metals (SPGM) catalysts suitable for diesel oxidation are disclosed. Catalytic layers of SPGM catalyst samples contain a washcoat layer substantially free of PGM material (ZPGM). The SPGM catalyst includes a washcoat layer comprising YMn₂O₅ (pseudobrookite) and an overcoat layer including a Pt/Pd composition with a total PGM loading of up to 176.6 g/m³ (5.0 g/ft³). Resistance to sulfur poisoning and catalytic stability under sulfation conditions with high NO oxidation, and HC and CO conversion performances are observed.

## Description

### BACKGROUND

### Field of the Disclosure

This disclosure relates generally to diesel oxidation catalysts for the treatment of exhaust gas emissions from diesel engines, and more particularly, to sulfur-resistant synergized platinum group metals (SPGM) catalyst systems with low platinum group metals (PGM) loading, according to a catalyst structure including at least two distinct layers.

### Background Information

Diesel oxidation catalysts (DOCs) include PGM deposited on a metal support oxide. DOCs are used in treating diesel engine exhaust to reduce nitrogen oxides (NOx), hydrocarbons (HC), and carbon monoxide (CO) gaseous pollutants. The DOCs reduce the gaseous pollutants by oxidizing them.

Conventional catalytic converter manufacturers utilize a single PGM catalyst within their diesel exhaust systems. Since a mixture of platinum (Pt) and palladium (Pd) catalysts within the PGM portion of a catalytic system offer improved stability, the catalytic converter manufacturing industry has moved to manufacturing Pt/Pd-based DOCs.

In diesel engines, the sulfur present in the exhaust gas emissions may cause significant catalyst deactivation, even at very low concentrations due to the formation of strong metal-sulfur bonds. The strong metal-sulfur bonds are created when sulfur chemisorbs onto and reacts with the active catalyst sites of the metal. The stable metal-adsorbate bonds can produce non-selective side reactions which modify the surface chemistry.

Current attempts to solve this problem have led manufacturers to produce catalyst systems with improved sulfur resistance. Typically, these catalyst systems are manufactured by using high loadings of PGM. Unfortunately, utilizing high loadings of PGM within catalyst systems increases the cost of the catalyst systems because PGMs are expensive. PGMs are expensive because they are scarce, have a small market circulation volume, and exhibit constant fluctuations in price and constant risk to stable supply, amongst other issues.

Accordingly, as stricter regulatory standards are continuously adopted worldwide to control emissions, there is an increasing need to develop DOCs with improved properties for enhanced catalytic efficiency and sulfur poisoning stability.

### SUMMARY

The present disclosure describes synergized PGM (SPGM) catalysts with low PGM loading for diesel oxidation catalyst (DOC) applications.

It is an object of the present disclosure to describe embodiments of SPGM catalyst systems having a high catalytic activity and resistance to sulfur poisoning. In these embodiments, a catalytic layer of 5 g/ft³ of PGM active components is synergized with Zero-PGM (ZPGM) catalyst compositions including a pseudobrookite structure in a separate catalytic layer. In some embodiments, the disclosed 2-layer SPGM catalysts can provide catalyst systems exhibiting high oxidation activity as well as sulfur resistance.

According to some embodiments in the present disclosure, the disclosed SPGM DOC systems can be configured to include a washcoat (WC) layer of ZPGM material compositions deposited on a plurality of support oxides of selected base metal loadings. In these embodiments, the WC layer can be formed using a YMn₂O₅ pseudobrookite structure deposited on doped ZrO₂ support oxide.

In further embodiments, a second layer of the disclosed SPGM DOC system is configured as an overcoat (OC) layer. The OC layer includes a plurality of low PGM material compositions on support oxides. In these embodiments, the OC layer can be formed using an alumina-type support oxide which is metalized using a low loading PGM solution, such as a platinum (Pt) and palladium (Pd) solution, to form a alumina-type support oxide/ low loading PGM slurry. The alumina-type support oxide/ low loading PGM slurry is then deposited onto the WC layer, and subsequently calcined.

In other embodiments, the disclosed SPGM catalysts for DOC application are subjected to a DOC/sulfur test methodology to assess/verify significant NO oxidation activity and resistance to sulfur poisoning. In these embodiments, DOC light-off tests are performed to confirm synergistic effects of ZPGM catalytically active materials in the layered SPGM configuration. Further to these embodiments, the sulfur resistance and NO oxidation of disclosed SPGM catalyst samples are confirmed under a variety of DOC conditions at space velocity (SV) of about 54,000 h⁻¹, according to a plurality of steps in the test methodology.

Still further to these embodiments, the combined catalytic properties of the layers in SPGM catalyst systems can provide more efficiency in NO oxidation and more stability against sulfur poisoning.

Numerous other aspects, features, and benefits of the present disclosure may be made apparent from the following detailed description taken together with the drawing figures, which may illustrate the embodiments of the present disclosure, incorporated here for reference.

### BRIEF DESCRIPTION OF THE DRAWINGS

The present disclosure can be better understood by referring to the following figures. The components in the figures are not necessarily to scale, emphasis instead being place upon illustrating the principles of the disclosure. In the figures, reference numerals designate corresponding parts throughout the different views.
**FIG. 1** is a graphical representation illustrating a catalyst structure used for SPGM catalyst samples, according to an embodiment.
**FIG. 2** is a graphical representation illustrating a diagram of steps of a DOC test methodology to assess the catalyst activity and resistance to sulfur of SPGM catalyst samples, according to an embodiment.
**FIG. 3** is a graphical representation illustrating results of NO conversion LO for SPGM catalyst samples tested according to the DOC test methodology described in **FIG. 2****,** according to an embodiment.
**FIG. 4** is a graphical representation illustrating results of NO conversion LO for SPGM catalyst samples tested according to the DOC test methodology described in **FIG. 2****,** according to an embodiment.
**FIG. 5** is a graphical representation illustrating results of NO, CO and THC conversion stability for SPGM catalyst samples tested according to the DOC test methodology described in **FIG. 2****,** according to an embodiment.

### DETAILED DESCRIPTION

The present disclosure is here described in detail with reference to embodiments illustrated in the drawings, which form a part here. Other embodiments may be used and/or other changes may be made without departing from the spirit or scope of the present disclosure. The illustrative embodiments described in the detailed description are not meant to be limiting of the subject matter presented here.

### Definitions

As used here, the following terms have the following definitions:
**"Catalyst"** refers to one or more materials that may be of use in the conversion of one or more other materials.
**"Washcoat"** refers to at least one coating including at least one oxide solid that may be deposited on a substrate.
**"Substrate"** refers to any material of any shape or configuration that yields a sufficient surface area for depositing a washcoat and/or overcoat.
**"Overcoat"** refers to at least one coating that may be deposited on at least one washcoat or impregnation layer.
**"Support oxide"** refers to porous solid oxides, typically mixed metal oxides, which are used to provide a high surface area which aids in oxygen distribution and exposure of catalysts to reactants such as NOₓ, CO, and hydrocarbons.
**"Zero PGM (ZPGM) catalyst"** refers to a catalyst completely or substantially free of platinum group metals.
**"Synergized PGM (SPGM) catalyst"** refers to a PGM catalyst system which is synergized by a ZPGM compound under different configuration.
**"Catalyst system"** refers to any system including a catalyst, such as, a PGM catalyst or a ZPGM catalyst of at least two layers comprising a substrate, a washcoat and/or an overcoat.
**"Diesel oxidation catalyst (DOC)"** refers to a device which utilizes a chemical process in order to break down pollutants from a diesel engine or lean burn gasoline engine in the exhaust stream, turning them into less harmful components.
**"Pseudobrookite"** refers to a ZPGM catalyst, having an AB₂O₅ structure of material which may be formed by partially substituting element "A" and "B" base metals with suitable non-platinum group metals.
**"Incipient wetness (IW)"** refers to the process of adding solution of catalytic material to a dry support oxide powder until all pore volume of support oxide is filled out with solution and mixture goes slightly near saturation point.
**"Metallizing"** refers to the process of coating metal on the surface of metallic or non-metallic objects.
**"Conversion"** refers to the chemical alteration of at least one material into one or more other materials.
**"Poisoning or catalyst poisoning"** refers to the inactivation of a catalyst by virtue of its exposure to lead, phosphorus, or sulfur in an engine exhaust.

### Description of the Drawings

The present disclosure is directed to a diesel oxidation catalyst (DOC) system configuration. The DOC configuration includes a 2-layer catalyst having a washcoat (WC) layer of Zero-PGM (ZPGM) catalyst and an overcoat (OC) layer. The overcoat (OC) layer is a low loading PGM catalyst. This 2-layer catalyst improves the conversion rate of NOx, HC, and CO contained with the exhaust gases emitted from the diesel engine.

### Configuration, material composition, and preparation of SPGM catalyst systems

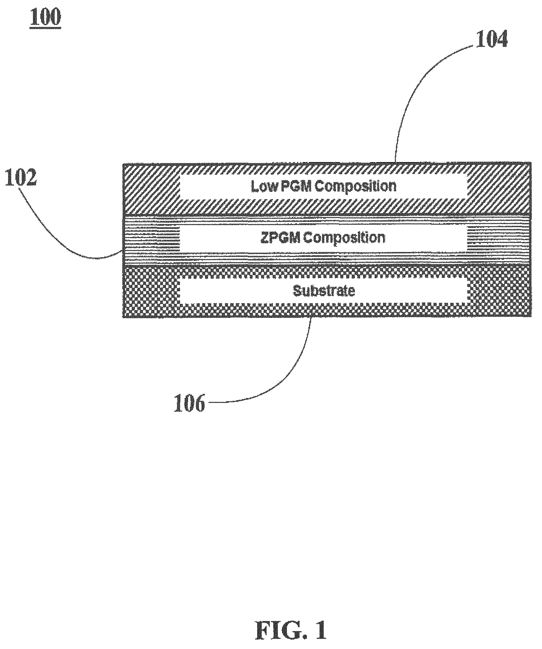

**FIG. 1** is a graphical representation illustrating a catalyst structure used for SPGM catalyst samples that includes a supported pseudobrookite structure implemented as a ZPGM composition within a washcoat layer, and an overcoat layer comprising a low loading PGM composition, according to an embodiment. In **FIG. 1****,** SPGM catalyst structure **100** includes WC layer **102,** OC layer **104,** and substrate **106.** WC layer **102** is deposited onto substrate **106** and OC layer **104** is deposited onto WC layer **102.** In some embodiments, WC layer **102** is implemented as a ZPGM composition, and an OC layer **104** is implemented as a low PGM composition.

In some embodiments, SPGM catalyst samples are implemented including WC layer **102** that comprises a pseudobrookite oxide structure of AB₂O₅ deposited on a support oxide. In these embodiments, OC layer **104** is implemented including one or more PGM material compositions deposited on support oxide.

Example materials suitable to form pseudobrookites with the general formula of AB₂O₅ include, but are not limited to, silver (Ag), manganese (Mn), yttrium (Y), lanthanum (La), cerium (Ce), iron (Fe), praseodymium (Pr), neodymium (Nd), strontium (Sr), cadmium (Cd), cobalt (Co), scandium (Sc), copper (Cu), and niobium (Nb). Suitable support oxides that can be used in WC and OC layers include zirconia (ZrO₂)_{,} any doped ZrO₂ including doping such as lanthanide group metals, niobium pentoxide, niobium-zirconia, alumina-type support oxide, titanium dioxide, tin oxide, zeolite, silicon dioxide, or mixtures thereof, amongst others. PGM material compositions include platinum, palladium, ruthenium, iridium, and rhodium, either by themselves, or combinations thereof of different loadings.

In an example, a ZPGM catalyst used in a WC layer of a SPGM catalyst structure includes YMn₂O₅ pseudobrookite composition deposited on a doped ZrO₂ support oxide.

In some embodiments, preparation of the WC layer begins with preparation of a Y-Mn solution. In these embodiments, preparation of the Y-Mn solution includes mixing Y nitrate solution with Mn nitrate solution and water to produce a solution at the appropriate molar ratio. In an example, a Y:Mn molar ratio of 1:2 is used.

In other embodiments, the Y-Mn nitrate solution is added to doped ZrO₂ powder using a conventional incipient wetness (IW) technique forming a Y-Mn/doped ZrO₂ slurry. In these embodiments, the Y-Mn/doped ZrO₂ slurry is dried and calcined at about 750 °C for about 5 hours. Further to these embodiments, the calcined Y-Mn/doped ZrO₂ powder is then ground to fine grain for producing, for example, YMn₂O₅/doped ZrO₂ powder. In an example, YMn₂O₅/doped ZrO₂ powder is subsequently milled with water to produce a slurry. In the example, the slurry is then coated onto a suitable substrate for calcination at about 750 °C for about 5 hours. A substrate coated and calcined in this matter forms a WC layer.

In some embodiments, the PGM catalyst used in the OC layer includes a PGM solution of platinum (Pt) and palladium (Pd) nitrates deposited on an alumina-type support oxide.

In an example, the preparation of the OC layer includes milling of doped Al₂O₃ support oxide. In this example, the milled doped Al₂O₃ support oxide is mixed with water to form aqueous slurry. Further to this example, the doped Al₂O₃ support oxide slurry is metallized by a solution of Pt and Pd nitrates with a total loading of PGM within about 5 g/ft³, preferably about 4.5 g/ft³ of Pt and about 0.25 g/ft³ of Pd. Subsequently, the OC layer is deposited onto the WC layer and calcined at about 550 °C for about 4 hours.

### DOC LO and sulfation test methodology

In some embodiments, a DOC/sulfur test methodology can be applied to SPGM catalyst systems as described in **FIG. 1****.** In these embodiments, the DOC/sulfur test methodology provides confirmation that the disclosed catalyst systems, including a WC layer of ZPGM (YMn₂O₅ pseudobrookite structure) with an OC layer of low PGM for DOC applications, exhibit increased conversion of gaseous pollutants. Further to these embodiments, SPGM catalysts prepared with low amount of PGM added to ZPGM catalyst materials are capable of providing significant improvements in sulfur resistance.

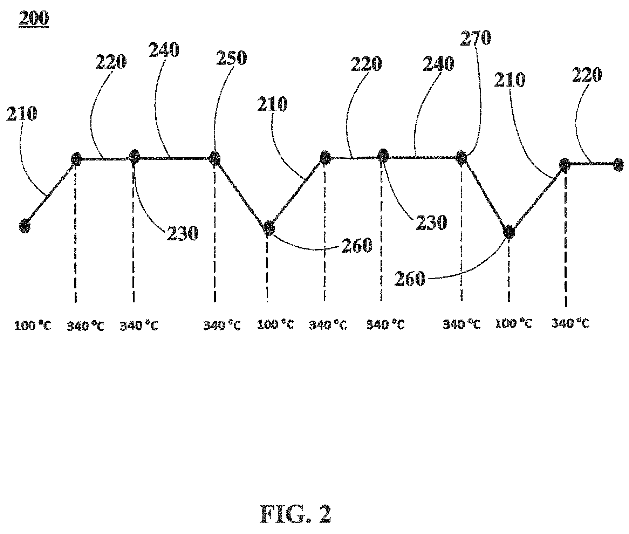

**FIG. 2** is a graphical representation illustrating the steps of a DOC test methodology for assessing SPGM catalyst samples for catalyst activity and resistance to sulfur, according to an embodiment.

In **FIG. 2****,** DOC test methodology **200** employs a standard gas stream composition administered throughout the following steps: DOC light-off (LO), soaking at isothermal DOC condition, and soaking at isothermal sulfated DOC condition. For these embodiments, DOC test methodology **200** steps are enabled during different time periods selected to assess the catalytic activity and resistance to sulfur of the SPGM catalyst samples. Steps in DOC test methodology **200** are conducted at an isothermal temperature of about 340 °C and space velocity (SV) of about 54,000 h⁻¹.

In some embodiments, DOC test methodology **200** begins with DOC LO test **210.** The DOC LO test is performed employing a flow reactor with flowing DOC gas composition of about 100 ppm of NO, about 1,500 ppm of CO, about 4% of CO₂, about 4% of H₂O, about 14% of O₂, and about 430 ppmCl of mixed hydrocarbon, while temperature increases from about 100 °C to about 340 °C, at SV of about 54,000 h⁻¹. Subsequently, at about 340 °C, isothermal soaking under DOC condition **220** is conducted for about one hour to stabilize catalyst performance at about 340 °C. At the end of this time period, at point **230,** testing under soaking at isothermal sulfated DOC condition **240** begins by adding a concentration of about 3 ppm of SO₂ to the gas stream for about 4 hours. At the end of this time period, at point **250,** the sulfation process is stopped when the amount of SO₂ passed to catalyst is about 0.9 gS/L (grams of sulfur per liter) of substrate. Subsequently, the flowing gas stream is allowed to cool down to about 100 °C, at point **260.** After this point, DOC test methodology **200** continues by conducting another cycle of test steps including DOC LO test **210,** isothermal soaking under DOC condition **220** for about one hour, and sulfated DOC condition **240,** flowing about 3 ppm of SO₂ for about 2 hours in the gas stream, until reaching a total SO₂ passed to catalyst of about 1.3 gS/L of substrate at point **270,** when sulfation of the gas stream is stopped. Finally, the catalyst activity of the SPGM catalyst sample is determined by another DOC LO and soaking after a total of about 6 hours of sulfation soaking. NO conversion and sulfur resistance are compared at the end of the test for all the DOC conditions (e.g., before and after sulfation, in the test methodology).

In other embodiments, DOC test methodology **200** begins with DOC LO test **210,** which is conducted employing a flow reactor with flowing DOC gas composition of about 100 ppm of NO, about 1,500 ppm of CO, about 4% of CO₂, about 4% of H₂O, about 14% of O₂, and about 430 ppmCl of mixed hydrocarbon, while temperature increases from about 100 °C to about 340 °C, at SV of about 54,000 h⁻¹. Subsequently, at about 340 °C, isothermal soaking under DOC condition **220** is conducted for about one hour to stabilize catalyst performance at about 340 °C. At the end of this time period, at point **230,** testing under soaking at isothermal sulfated DOC condition **240** begins by adding a concentration of about 5.8 ppm of SO₂ to the gas stream, for about 6 hours. At the end of this time period, at point **250,** the sulfation process is stopped when the amount of SO₂ passed to the catalyst is about 2.6 gS/L of substrate. Subsequently, the flowing gas stream is allowed to cool down to about 100 °C, at point **260.** DOC test methodology **200** continues by conducting another cycle of test steps including DOC LO test **210,** isothermal soaking under DOC condition **220** for about one hour, and sulfated DOC condition **240,** flowing about 5.8 ppm of SO₂ for about 6 hours in the gas stream, until reaching a total SO₂ passed to catalyst of about 5.2 gS/L of substrate at point **270,** when sulfation of the gas stream is stopped. Finally, the catalyst activity of the SPGM catalyst sample is determined by another DOC LO and soaking after a total of about 12 hours of sulfation soaking. NO conversion and sulfur resistance are compared at the end of the test for all the DOC conditions (e.g., before and after sulfation, in the test methodology).

### Catalyst activity of SPGM system before and after sulfation conditions

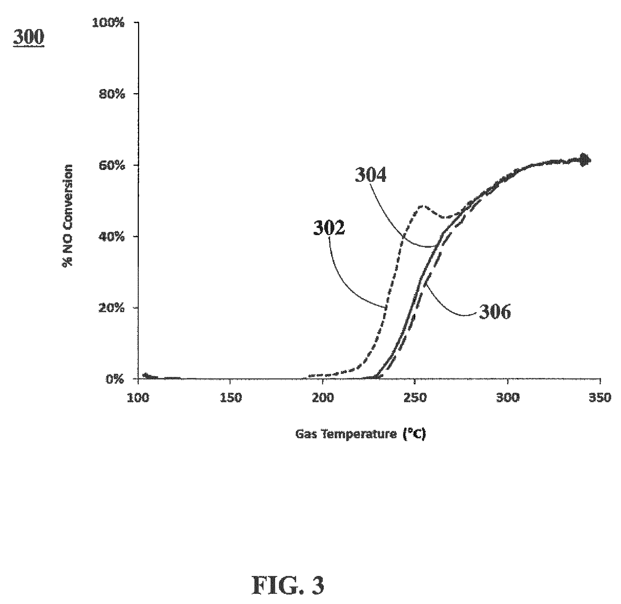

**FIG. 3** is a graphical representation illustrating results of NO conversion LO for SPGM catalyst samples tested according to the DOC test methodology described in **FIG. 2****,** according to an embodiment.

In **FIG. 3****,** three specific conversion curves are detailed as follows: conversion curve **302** illustrates % NO conversion LO before sulfation, under DOC LO test **210** and isothermal soaking under DOC condition **220;** conversion curve **304** illustrates % NO conversion LO after sulfation under sulfated DOC condition **240** for about 4 hours, SO₂ concentration of about 0.9 gS/L; and conversion curve **306** illustrates % NO conversion after sulfation under sulfated DOC condition **240** for a second period of about 2 hours, (a total sulfation time of about 6 hours), with SO₂ concentration of about 1.3 gS/L.

In **FIG. 3****,** it can be observed that before sulfation NO oxidation, as illustrated by conversion curve **302,** reaches a NO conversion of about 48% at about 252 °C. The maximum NO conversion of about 61% is achieved at about 340 °C. Further, after sulfation poisoning with about 0.9 gS/L or about 1.3 gS/L, as illustrated by conversion curve **304** and conversion curve **306,** a decrease in NO conversion is observed at lower temperature ranges. However, at higher temperature ranges (from about 290 °C to about 340 °C), NO conversion of the sulfated SPGM catalyst is substantially similar to the non-sulfated SPGM catalyst. This level of NO oxidation LO indicates the SPGM catalyst possesses a significant sulfur resistance at higher temperature ranges. Finally, significant sulfur resistance of the SPGM catalyst is confirmed by the stable NO conversion of about 61% at 340 °C after sulfation poisoning with about 0.9 gS/L or about 1.3 gS/L.

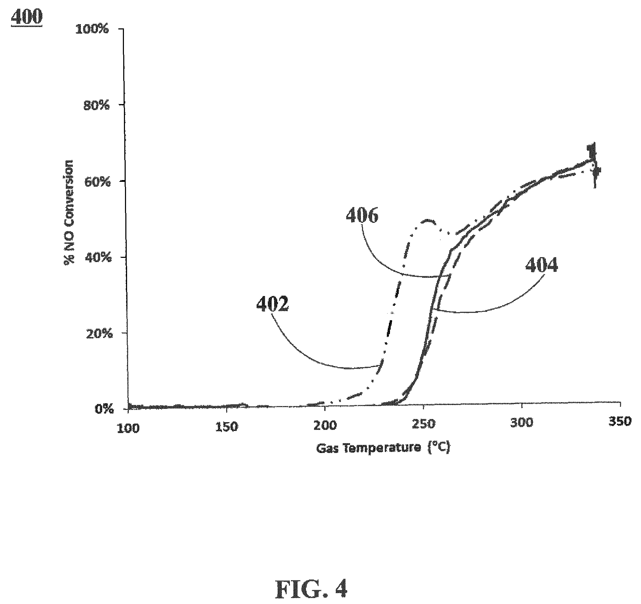

**FIG. 4** is a graphical representation illustrating results of NO conversion LO for SPGM catalyst samples tested according to the DOC test methodology described in **FIG. 2****,** according to an embodiment.

In **FIG. 4****,** three specific conversion curves are detailed as follows: conversion curve **402** illustrates % NO conversion LO before sulfation, under DOC LO test **210** and isothermal soaking under DOC condition **220;** conversion curve **404** illustrates % NO conversion LO after sulfation under sulfated DOC condition **240** for about 6 hours, SO₂ concentration of about 2.6 gS/L; and conversion curve **406** illustrates % NO conversion after sulfation under sulfated DOC condition **240** for a second period of about 6 hours, (a total sulfation time of about 12 hours), with SO₂ concentration of about 5.2 gS/L.

In **FIG. 4****,** it can be observed that before sulfation NO oxidation, as illustrated by conversion curve **402,** reaches a NO conversion of about 48% at about 252 °C. The maximum NO conversion of about 61% is achieved at about 340 °C. Further, after sulfation poisoning with about 2.6 gS/L or 5.2 gS/L, as illustrated by conversion curve **404** and conversion curve **406,** respectively, a decrease in NO conversion is observed at lower temperature ranges. However, at higher temperature ranges (from about 290 °C to about 340 °C), NO conversion of the sulfated SPGM catalyst is substantially similar to the non-sulfated SPGM catalyst. This level of NO oxidation LO indicates the SPGM catalyst possesses a significant sulfur resistance at higher temperature ranges. Finally, significant sulfur resistance of the SPGM catalyst is confirmed by the stable NO conversion after sulfation poisoning with about 2.6 gS/L or about 5.2 gS/L.

The test results of **FIGS. 3** and **4** confirm that the disclosed SPGM catalyst systems possess significant catalyst performance efficiency and sulfur resistance.

### Sulfur resistance of SPGM catalyst

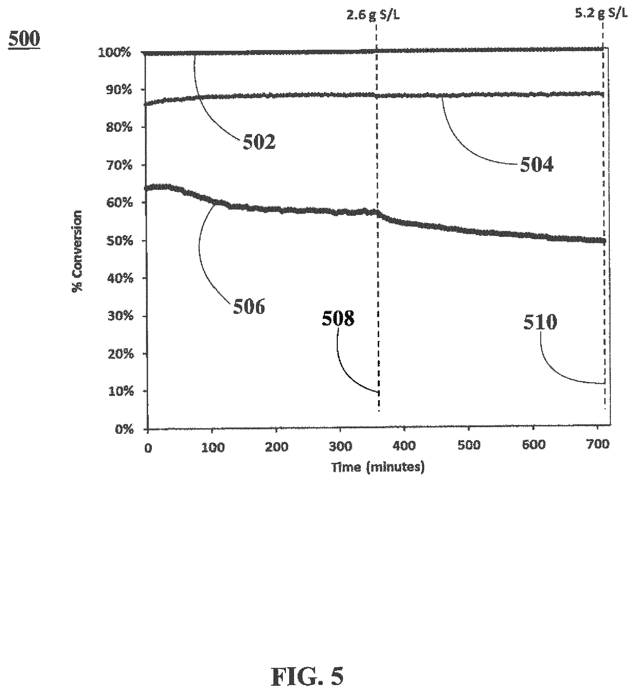

**FIG. 5** is a graphical representation illustrating results of NO, CO and THC conversion stability for SPGM catalyst samples tested according to the DOC test methodology described in **FIG. 2****,** according to an embodiment.

In **FIG. 5****,** three specific conversion curves are detailed as follows: conversion curve **502,** conversion curve **504,** and conversion curve **506** illustrates % CO conversion, %THC conversion, and % NO conversion at about 340 °C, respectively, for the entire protocol of the DOC test methodology as described in **FIG. 2****.** Dotted lines **508** and **510,** illustrate the total sulfur concentrations passing through the SPGM catalyst system at different times during the sulfation process of the disclosed SPGM catalyst samples. Line **508** illustrates where sulfur concentration is about 2.6 gS/L, and line **510** illustrates where sulfur concentration is about 5.2 gS/L.

In **FIG. 5****,** it can be observed that at about 340 °C the disclosed SPGM catalyst systems exhibit high percentage of conversion and stable conversion levels of CO and THC. These levels of about 100.0% CO conversion and about 88.0% THC conversion are highly desirable catalytic properties for a SPGM system operating in DOC applications.

In **FIG. 5****,** it can also be observed from the analysis of conversion curve **506** that during long-term sulfation poisoning of the SPGM catalyst samples at the plurality of sulfur concentrations NO conversion is reduced from about 64.0% to about 57.0% after sulfation poisoning of about 2.6 gS/L for an initial approximate six hour period. Further, analysis of conversion curve **506** indicates that during long-term sulfation poisoning of the SPGM catalyst samples NO conversion is reduced from about 57.0% to about 49.0% after sulfation poisoning of about 5.2 gS/L for an additional approximate six hour period. These results confirm that the disclosed SPGM catalyst systems can provide a significant sulfur-resistant property desirable for DOC applications, at the sulfation of about 2.6 gS/L or about 5.2 gS/L.

The results achieved during testing of the SPGM catalyst samples in the present disclosure confirm that SPGM catalyst systems produced to include a layer of low amount of PGM catalyst material added to a layer of ZPGM catalyst material are capable of providing significant improvements in sulfur resistance. As observed in FIG. 5, the THC and CO conversions of the disclosed SPGM catalysts are significantly stable after long-term sulfation exposure and exhibit a high level of acceptance of NO conversion stability.

The diesel oxidation properties of the disclosed 2-layer SPGM catalyst systems indicate that under lean conditions the chemical composition is more efficient as compared to conventional DOC systems.

While various aspects and embodiments have been disclosed, other aspects and embodiments can be contemplated. The various aspects and embodiments disclosed here are for purposes of illustration and are not intended to be limiting, with the true scope and spirit being indicated by the following claims.

## Claims

1. A catalytic composition suitable for diesel oxidation catalysts applications, comprising: a platinum group metal and at least one pseudobrookite structured compound.

2. The composition of claim 1 wherein the pseudobrookite structured compound has a general formula of AB₂O₅.

3. The composition of claim 2, wherein A and B are selected from the group consisting of silver, manganese, yttrium, lanthanum, cerium, iron, praseodymium, neodymium, strontium, cadmium, cobalt, scandium, copper, and niobium.

4. The composition of one of the preceding claims, wherein the platinum group metal is selected from the group consisting of platinum, palladium, ruthenium, iridium, rhodium, and combinations thereof.

5. The composition of the one of the preceding claims wherein the least one pseudobrookite structured compound is YMn₂O₅.

6. The composition of claim 5 wherein a molar ratio of Y:Mn is 1:2.

7. A catalyst system comprising the catalytic composition of one of the preceding claims, the system comprising:
a substrate;
a washcoat layer deposited overlying the substrate, the washcoat layer comprising the pseudobrookite structured compound and a support oxide; and
an overcoat layer overlying the washcoat layer, the overcoat layer comprising the platinum group metal.

8. The catalyst system of claim 7, wherein the support oxide is ZrO₂.

9. The catalyst system of claim 7, wherein the washcoat layer comprises YMn₂O₅ that is supported on ZrO₂, and the overcoat layer comprises platinum and palladium that is supported on an Al₂O₃ support oxide.

10. The catalyst system of claim 7, wherein a total loading of the platinum group metal in the overcoat layer is 5.0 g/ft³.

11. The catalyst system of claim 7, wherein the overcoat layer comprises a platinum loading of 4.5 g/ft³, and a palladium loading of 0.25 g/ft³.

12. The catalyst system of claim 7, wherein the catalyst system exhibits a conversion of CO of 100% under sulfation of 5.2 g/L.

13. The catalyst system of claim 7, wherein the catalyst system exhibits a conversion of NO of 50% under sulfation of 5.2 g/L.

14. The catalyst system of claim 7, wherein the catalyst system exhibits a conversion of HC of 88% under sulfation of 5.2 g/L.

15. The catalyst system of claim 7, wherein the catalyst system exhibits a conversion of NO of 60% at about 340 °C.
